# EUROPÄISCHE PATENTANMELDUNG

(11) **EP 2 837 916 A1**
(43) Veröffentlichungstag der Anmeldung: **18.02.2015**
(21) Anmeldenummer: 13180034.4
(22) Anmeldetag: 12.08.2013
(51) Int. Cl.: G01D 5/347

(54) **Drehgeber**

(71) Anmelder: Siemens Aktiengesellschaft, 80333 München (DE)
(72) Erfinder: Wetzel, Ulrich, 91058 Erlangen (DE); Zettner, Jürgen, 90587 Veitsbronn (DE)

(57) **Zusammenfassung**

Es soll ein kostengünstiger Drehgeber für industrielle Anwendungen geschaffen werden. Die Erfindung schlägt hierfür einen Drehgeber (1) mit einer Lichtquelle (2), einer Codescheibe (3), die einen Codeträger (3A) und eine auf den Codeträger (3A) aufgebrachte Maßverkörperung umfasst, und einem Lichtempfänger (4) vor, bei dem der Codeträger (3A) aus einem Metall oder einer Metalllegierung ausgebildet ist. Die Ausbildung des Codeträgers (3A) aus Metall oder einer Metalllegierung ist eine kostengünstige und einfach bearbeitbare Alternative im Vergleich zu herkömmlichen Codeträgern aus Glas oder Silizium.

## Beschreibung

Die Erfindung betrifft einen Drehgeber mit einer Lichtquelle, einer Codescheibe und einem Lichtempfänger.

Aus der Druckschrift WO 2005/071363 A1 ist ein Drehgeber bekannt, bei dem eine an einer drehbar gelagerten Welle befestigte Codescheibe mit einer Maßverkörperung (einem Code) versehen ist. Bei einer Ausführungsform gemäß FIG 1 der WO 2005/071363 A1 trifft von einer Lichtquelle ausgehendes Licht die Codescheibe und wird von dort an einer reflektierenden Schicht der Codescheibe reflektiert und von einem Lichtempfänger empfangen. Dabei sind die Lichtquelle und der Lichtempfänger auf einem gemeinsamen Träger angeordnet, was die Anzahl der Bauteile, den Platzbedarf und damit die Herstellungskosten senkt.

Hochauflösende optische Drehgeber zur Generierung von genauen Winkelinformationen sind heute in der Regel mit Codescheiben aus Glas, Silizium oder Kunststoff als Codeträger ausgebildet, auf die eine Maßverkörperung aufgebracht ist. Bei refraktiven Maßverkörperungen handelt es sich üblicher Weise um einfache Hell-Dunkel-Strukturen (Striche), die mit entsprechenden Optikeinheiten abgetastet werden. Die Codescheiben können entweder transparent oder reflexiv ausgebildet sein. Die Maßverkörperungen werden in einem aufwändigen lithographischen Prozess hergestellt. Maßverkörperungen mit Hologrammen als Informationsträger können mit einfacheren Abformprozessen (z.B. UV-Casting) hergestellt werden. Hierfür bieten Codeträger aus Glas, Silizium oder Kunststoff die hierfür erforderliche Ebenheit. Gerade hochauflösende Drehgeber im industriellen Einsatz setzen aber eine erhöhte Stabilität des Codeträgers voraus. Temperatur- und mechanische Beanspruchung (hohe Drehzahl, Vibrationen etc.) schränken daher bisher die Auswahl des Materials für den Codeträger auf Glas oder Silizium ein.

Aufgabe der vorliegenden Erfindung ist es, kostengünstige hochauflösende Drehgeber für den industriellen Einsatz zu schaffen.

Diese Aufgabe wird bei einem Drehgeber mit einer Lichtquelle, einer Codescheibe, die einen Codeträger und eine auf den Codeträger aufgebrachte Maßverkörperung umfasst, und einem Lichtempfänger dadurch gelöst, dass der Codeträger aus einem Metall oder einer Metalllegierung ausgebildet ist.

Durch den Einsatz von Metall bzw. einer Metalllegierung als Trägermaterial für den Codeträger ist eine hohe Stabilität gegeben. Vorteilhaft wird der Codeträger insbesondere aus poliertem Stahl bzw. poliertem Aluminium ausgebildet. Die einfache Bearbeitbarkeit und der relativ geringe Beschaffungspreis von Stahl bzw. Aluminium verringern die Herstellungskosten gegenüber Materialien wie Glas oder Silizium merklich. Insbesondere Bearbeitungsvorgänge wie Zuschneiden oder Bohren bei der Herstellung einer entsprechenden Codescheibe sind dabei viel günstiger durchführbar als bei den bisher verwendeten Materialien. Die erforderliche Ebenheit lässt sich durch Polieren der Oberfläche ebenfalls verhältnismäßig kostengünstig erreichen. Leichte Unebenheiten können weiterhin auch durch eine entsprechende Anpassung des Abformprozesses beim Aufbringen der Maßverkörperung auf den Codeträger ausgeglichen werden.

Die Maßverkörperung wird vorteilhaft mittels eines an sich bekannten UV-Casting-Verfahrens auf die Codescheibe aus Metall bzw. einer Metalllegierung aufgebracht. Dabei wird beispielsweise in einem ersten Verfahrensschritt zunächst ein transparenter UV-Lack auf die Codescheibe appliziert. Anschließend wird eine spezielle transparente Folie mit holografischer Struktur (der Master) vollflächig oder partiell aufgebracht, insbesondere auflaminiert, und anschließend der Lack durch die Folie hindurch mit UV-Licht gehärtet. Löst man anschließend die holografische Struktur ab, bleibt die holografische Struktur als offene Struktur im UV-Lack enthalten. Bei der Anwendung dieses Verfahrens zur Herstellung eines Drehgebers verbirgt sich vorteilhaft hinter der holografischen Struktur die Maßverkörperung. Ein weiterer Vorteil dieses Verfahrens ist, dass mithilfe eines Masters viele Abformungen durchgeführt werden, was wiederum die Kosten zur Herstellung eines entsprechenden Drehgebers enorm senkt.

Eine bevorzugte Ausführungsform der Erfindung sieht vor, dass als Maßverkörperung eine transmissive diffraktive Struktur auf den Codeträger aufgebracht ist. Die Reflexion des Lichts erfolgt dabei an der polierten Metalloberfläche, die das darauf auftreffende Licht reflektiert.

Eine andere Ausführungsform der Erfindung sieht vor, dass als Maßverkörperung eine wenigstens teilweise mit einer reflexiven Oberfläche ausgebildete diffraktive Struktur auf den Codeträger aufgebracht ist. Durch die reflexive Schicht wird das darauf auftreffende Licht optimal reflektiert.

Die Erfindung wird nachfolgend anhand von Ausführungsbeispielen näher erläutert. Es zeigt:
- FIG 1: das Grundprinzip eines Drehgebers,
- FIG 2: einen Codeträger mit einer darauf aufgebrachten transmissiven diffraktiven Struktur, und
- FIG 3: einen Codeträger mit einer darauf aufgebrachten reflexiven Struktur.

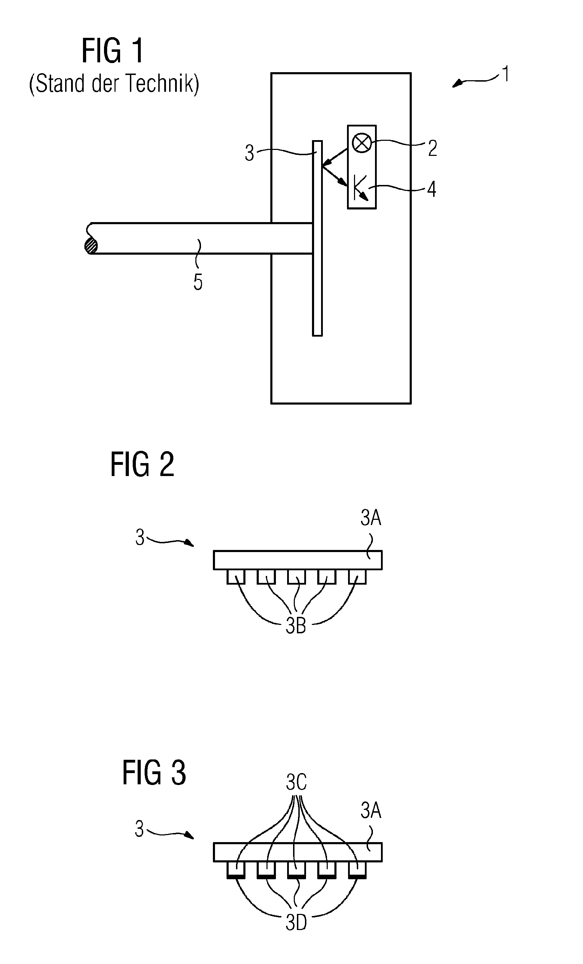

FIG 1 zeigt in stark vereinfachter Darstellung die wesentlichen Komponenten eines Drehgebers 1 gemäß dem Stand der Technik. Dabei trifft ein von einer Lichtquelle 2 ausgehendes Licht auf eine Codescheibe 3 und wird dort an einer reflektierenden Schicht der Codescheibe 3 reflektiert und von einem Lichtempfänger 4 empfangen. Die Codescheibe 3 ist mit einer Maßverkörperung (einer Codierung) versehen, an der das auf sie auftreffende Licht gemäß den Regeln der Diffraktion unterschiedlich gebeugt wird. So kann anhand des auf den Lichtempfänger 4 auftreffenden Lichts ein Drehwinkel der Codescheibe 3 bestimmt werden. Die Codescheibe 3 ist an einer Welle 5 befestigt und drehbar gelagert. Die Welle 5 ist mit einer weiteren Welle (nicht dargestellt) verbunden, deren Drehwinkel mittels des Drehgebers 1 bestimmt werden soll, z.B. einer Motorwelle.

Auch der erfindungsgemäße Drehgeber kann prinzipiell wie der in Figur 1 dargestellte Drehgeber 1 aufgebaut sein, wobei vorteilhaft alle wesentlichen Komponenten (Lichtquelle, Codescheibe, Lichtempfänger) in einem gemeinsamen Gebergehäuse angeordnet sind. Der Unterschied des erfindungsgemäßen Drehgebers gegenüber bekannten Drehgebern liegt in der Wahl des Materials für die Codescheibe.

FIG 2 zeigt eine erste Ausführungsform für einen erfindungsgemäßen Aufbau einer Codescheibe 3. Diese umfasst einen Codeträger 3A, der aus einem Metall, z.B. Aluminium, oder einer Metalllegierung, z.B. Stahl, aufgebaut ist. Wenigstens die der Lichtquelle zugewandte Oberfläche des Codeträgers 3A ist poliert und mit einer Maßverkörperung in Form einer diffraktiven Struktur 3B versehen. Dabei handelt es sich im Ausführungsbeispiel gemäß FIG 2 um eine transmissive diffraktive Struktur, bei der das auf die Struktur treffende Licht die Struktur durchdringen kann.

Im Unterschied hierzu zeigt das Ausführungsbeispiel gemäß FIG 3 eine Codescheibe 3, umfassend einen Codeträger 3A, der analog zu dem Ausführungsbeispiel gemäß FIG 2 ebenfalls wenigstens an einer der Lichtquelle des Gebers zugewandten Oberfläche poliert und mit einer Maßverkörperung versehen ist. Im Unterschied zum Ausführungsbeispiel gemäß FIG 2 ist bei FIG 3 die Maßverkörperung jedoch als reflexive diffraktive Struktur 3C ausgebildet. Hierbei wird die Reflexion des auf die Maßverkörperung treffenden Lichts durch ein an der Oberfläche der Struktur befindliche reflexive Schicht 3D bewirkt. Diese Ausführungsform ist im Vergleich zu der Ausführungsform gemäß FIG 2 etwas aufwändiger und diesbezüglich teurer bei der Herstellung, jedoch können - je nach Wahl der reflexiven Schicht 3D - bessere Reflexionswerte erreicht werden.

## Patentansprüche

1. Drehgeber (1) mit einer Lichtquelle (2), einer Codescheibe (3), die einen Codeträger (3A) und eine auf den Codeträger (3A) aufgebrachte Maßverkörperung umfasst, und einem Lichtempfänger (4),
**dadurch gekennzeichnet, dass** der Codeträger (3A) aus einem Metall oder einer Metalllegierung ausgebildet ist.

2. Drehgeber nach Anspruch 1, wobei der Codeträger (3A) aus Stahl ausgebildet ist.

3. Drehgeber (1) nach Anspruch 1, wobei der Codeträger (3A) aus Aluminium ausgebildet ist.

4. Drehgeber (1) nach einem der Ansprüche 1 bis 3, wobei die Oberfläche des Codeträgers (3A) wenigstens teilweise poliert ist.

5. Drehgeber (1) nach einem der Ansprüche 1 bis 4, wobei als Maßverkörperung eine transmissive diffraktive Struktur (3B) auf dem Codeträger (3A) aufgebracht ist.

6. Drehgeber (1) nach einem der Ansprüche 1 bis 4, wobei als Maßverkörperung eine wenigstens teilweise mit einer reflexiven Oberfläche ausgebildete diffraktive Struktur (3C) auf dem Codeträger (3A) aufgebracht ist.

7. Drehgeber (1) nach Anspruch 6, wobei die diffraktive Struktur wenigstens teilweise mit einer reflexiven Schicht (3D) beschichtet ist.
